# EUROPEAN PATENT APPLICATION

(11) **EP 1 002 710 A2**
(43) Date of publication of application: **24.05.2000**
(21) Application number: 99108786.7
(22) Date of filing: 03.05.1999
(51) Int. Cl.: B62B 7/08

(54) **A child or doll carriage apparatus**

(30) Priority: 17.11.1998 CN 98124837
(71) Applicant: Lotus Onda Industrial Co., Ltd., Hongkong (HK)
(72) Inventor: Nin, Danny Chan Chung, Sai Kung, Kowloon (HK)
(74) Representative: Riebling, Peter, Dr.-Ing.

(57) **Abstract**

A pushchair, child stroller or similar is provided with some separation between side frame members (7) in the collapsed state in the approximate region in which a child's head may reside should the child still be resident in the seat during an inadvertent collapse of the chair. The pushchair also provides some sliding engagement (31) between the cross members between front and rear portions of the frame to allow some suspension and increase in the wheel base distance of the chair upon carrying heavier loads.

## Description

### FIELD OF THE INVENTION

This invention relates to a child or doll carriage apparatus and, in particular, although not necessarily solely, an apparatus in the form of a pushchair, pram or child stroller.

### DESCRIPTION OF THE PRIOR ART

Conventional push chairs comprise apparatus generally provided with front and rear wheels, a seat or chair positioned within a frame and an extending handle to allow the push chair to be pushed by a parent or guardian. Similar items are provided for children to push dolls in a stroller or similar.

For easy transportation, such push chairs are generally provided so that they may collapse from a normal in use state to a folded state. The folded state allows easier transportation in vehicles, easier storage and other space advantages when the push chair is not carrying the child.

Many push chairs have a frame extending upwardly and rearwardly from a front axel and terminating in one or more handles above and behind the seat provided for the child. The seat is provided intermediate of the two-side frames extending up from the front axel. When the push chair is collapsed for transportation, the side frames on either side of the seat collapsed towards the middle to lie adjacent to each other. Although this provides maximum benefit in reducing the size of the push chair, it can create problems should the chair inadvertently collapse while a child is still in the chair. The side frames tend to restrict towards the head of the child and have been known to create injury should this occur.

The seat portion of the chairs generally hangs from the side frames and the sides can collapse around the seat portion trapping a child within. The most likely region of injury is in the head region of the child as the head of the child tends to be positioned between the side frame members.

Another problem with existing push chairs is a lack of any flexibility in the chair to take increased load for different child weights or to accommodate movement of the child or uneven transfer of load on the chair.

In the case of doll carriage apparatus, these are often provided in the same form as the conventional child carrying apparatus. Similar damage may occur to expensive dolls with existing apparatus.

### OBJECT OF THE INVENTION

It is an object of the present invention to provide a child or doll carriage apparatus which overcomes some of the disadvantages of the prior art or at least provides the public with a useful choice.

### SUMMARY OF THE INVENTION

Accordingly, in a first aspect, the invention consists in a child or doll carriage apparatus comprising:
- a foldable seat portion for supporting a child or doll;
- a frame about said seat portion supporting said seat portion;
- at least two side frame members on opposed sides of said seat portion forming part of said frame;
- wheels connected to said frame to support said apparatus on a surface; and
- wherein said side frame members are movable between a first or in-use position in which said side frame members are separated one from the other and a second or collapsed position in which lower ends of said side frame members can be positioned adjacent to each other and an upper portion of said side frame members maintains some separation to accommodate the head of a child or doll.

In a second aspect, the invention consists in a child or doll carriage apparatus comprising:
- two side frame members, each side frame member having an upper and a lower end;
- wheels attached to lower ends of each of said side frame members;
- rear frame members interconnected directly or indirectly with said side frame members and having lower ends;
- wheels attached to said lower ends of said rear frame members;
- a foldable seat portion at least partly supported from said side members; and
- wherein said apparatus is changeable from a first configuration in which at least lower ends of said side frame members are spaced one from the other and said lower ends of said rear frame members are spaced from the lower ends of said side frame members and a second configuration wherein said lower ends of said side frame members are adjacent one another, said lower ends of said rear frame members are adjacent to one another and adjacent and behind said side frame members and an upper portion of each of said side frame members remains separated from each other to accommodate the head of a child or doll.

Accordingly, in a third aspect, the invention may be said to consist in a child or doll carriage apparatus comprising:
- a seat portion;
- a frame about said seat portion to support said seat portion;
- wheels on lower extremities of said frame to carry said frame on a surface;
- front and rear legs forming at least a part of said frame and pivotal with respect to each other to vary the distance between the lower extremities of said front and rear legs; and
- an articulated member between said front and rear legs pivotally connected with respect to one leg and pivotally and slidingly engaged on a respect of further leg and containing an articulated joint intermediate of the connections to said legs.

### BRIEF DESCRIPTION OF THE DRAWINGS

Preferred embodiments of the invention will now be described with reference to the drawings in which:

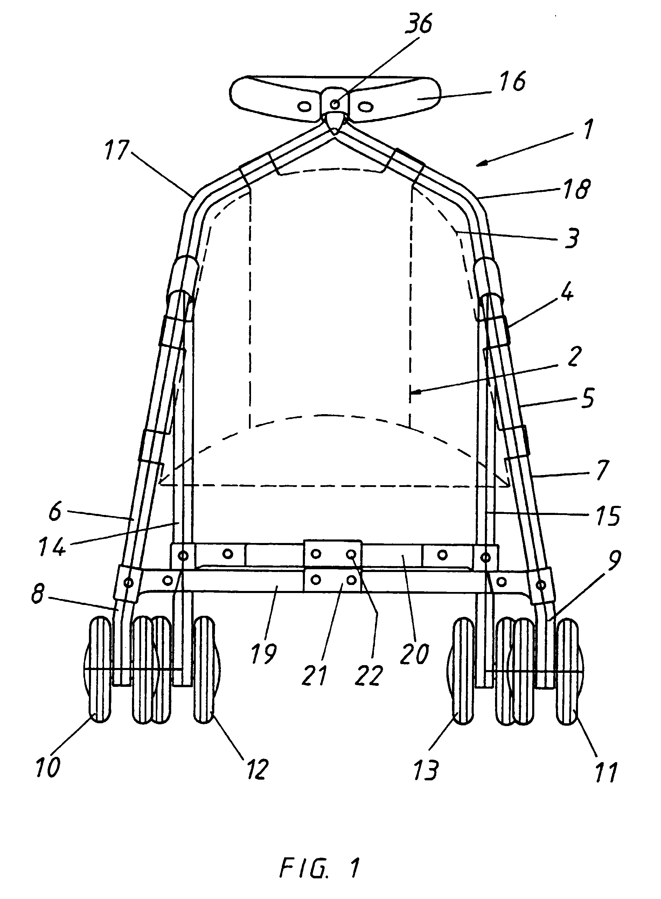

Fig. 1 is a front elevation of at least one embodiment of the apparatus;
Fig. 2 is a side elevation of the embodiment of Fig. 1;
Fig. 3 is an isometric view of the apparatus of Figs. 1 and 2 in a first configuration;
Fig. 4 is an isometric view of the apparatus of Fig. 3 in a second configuration;
Fig. 5 is an isometric view of the apparatus of the previous figures in a further configuration.

### DETAILED DESCRIPTION OF PREFERRED EMBODIMENTS

Referring to the drawings, the present invention is shown in a preferred embodiment in a child or doll carriage apparatus 1 provided in the form of a pushchair or stroller. For the sake of clarity, the seat portion 2 is shown and outlined by the dotted lines 3 being connected by straps 4 to portions of the frame 5 of the pushchair 1. The seat portion 2 is attached to the frame and supported by the frame. The seat portion 2 would generally be made from a flexible or foldable material to allow the pushchair to be collapsed to a folded state for transportation. In this preferred form, the seat portion 2 is made from a cloth material to allow easy folding of the seat portion 2 when in a collapsed condition.

The frame 5 which supports the seat portion 2 can be made in a variety of manners. This particular embodiment provides side members 6 and 7 which support adjacent sides of the seat portion 2 and extend down to lower ends 8 and 9 having wheels 10 and 11 attached respectively. The wheels 10 and 11 support the frame 5 on a surface so that the pushchair may be pushed on the wheels alone.

A further set of wheels 12 and 13 are provided attached to rear frame members 14 and 15 respectively. Again, these wheels are provided to support rear parts of the frame. In the preferred form, two rear frame members 14 and 15 are provided although in other configurations, a single rear frame member could be provided to support a single wheel set at the rear of the stroller or pushchair. Such a configuration requires the rear frame members to be positioned around the seat portion 2 and for this preferred embodiment, they are spaced apart attached to the side frame members 6 and 7.

As can be seen in this preferred embodiment, each of the wheel sets 10, 11, 12 and 13 actually comprise two wheels, one on either side of the frame member or leg to which they are attached. This is merely a preference and single wheels or multiple wheels can be used in substitution for each other.

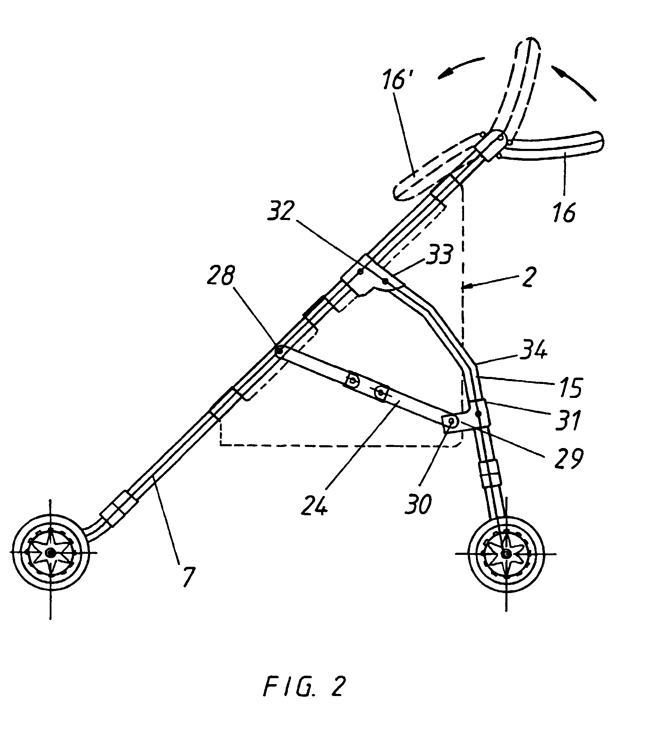

To simplify the frame construction, it can be seen that the frame members 5 and 6 being the side frame members extend upwardly and extend above and behind the seat portion 2 of the chair to terminate in a handle 16. As shown in Fig. 2, the handle portion 16 may be pivotally attached to allow it to be folded forward to position 16' when it is desired to collapse the pushchair or stroller for transportation.

Referring again to the side members 5 and 6, they are provided as continuous members in this preferred embodiment and are bent at regions 17 and 18 respectively so that they may converge to form the upper rear frame to which the handle is attached. In other embodiments, these could be separate joints with a separate rear frame member and multiple handles attached if desired.

This preferred embodiment provides cross members 19 and 20 between the respective sets of side frame members and rear frame members towards the lower ends of those members. Each of these cross members is provided with an articulated joint 21 and 22 respectively to allow the cross member to fold up and reduce the width of the pushchair when being collapsed for transportation.

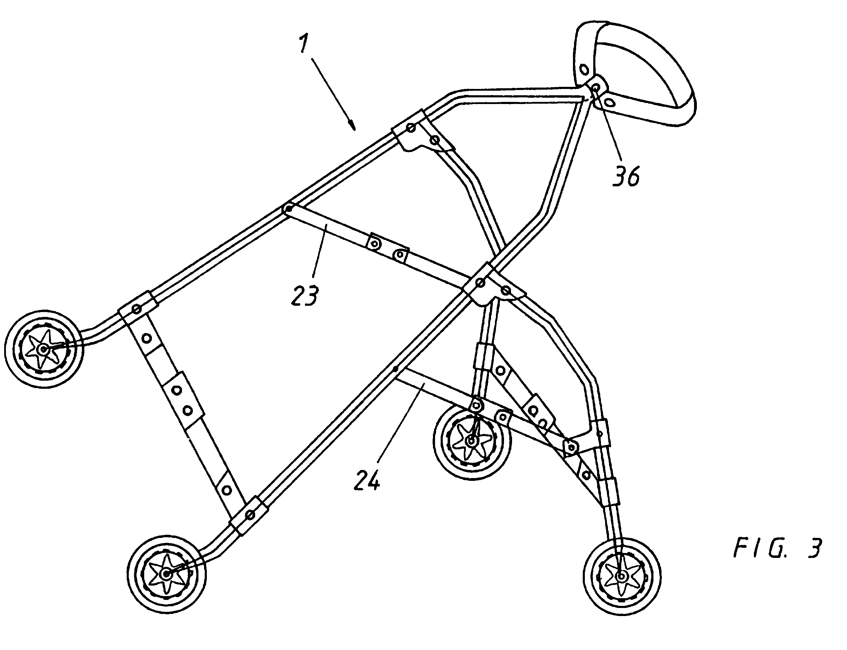

Similarly, side cross members 23 and 24 can be provided to maintain a distance between the front and rear wheels for stability of the pushchair. The isometric view in Fig. 3 shows the expanded or in use state of the pushchair with all the cross members fully extended.

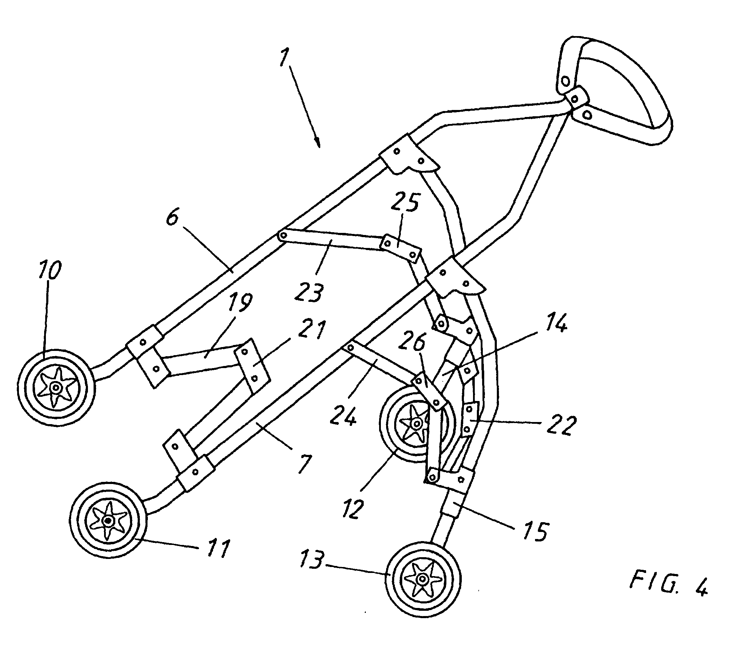

Referring to Fig. 4, the pushchair or stroller 1 is shown with the pivoting or articulated joints 21, 22, 25 and 26 for each of the cross members being folded to allow reduction in the size of the pushchair. It can be seen that the lower ends of the side frame members 6 and 7 adjacent the wheels 10 and 11 move towards each other as the cross member 19 is folded through the articulated joint 21. Similarly, the rear wheels 12 and 13 and the lower ends of the rear frame members 14 and 15 move towards each other as the pushchair is folded through a substantially vertical plane through the centre of the pushchair.

Similar folding of the side cross members 23 and 24 through the articulated joints 25 and 26 allow the rear frame members 14 and 15 to fold towards the side members 6 and 7 reducing the dimension of the pushchair on the front to rear axels.

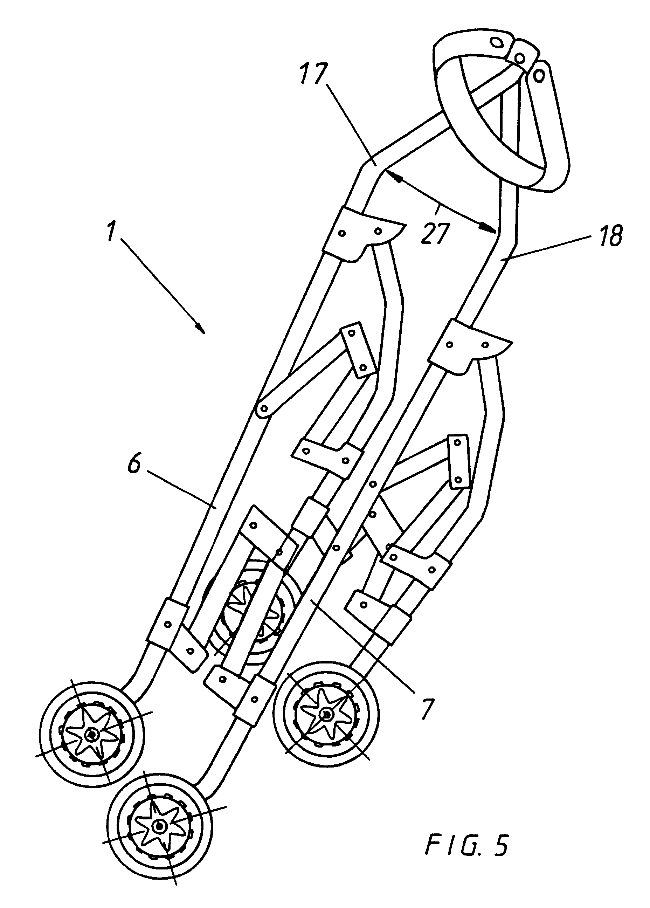

Fig. 5 shows the apparatus 1 in its collapsed state with the rear wheels 12 and 13 tucked adjacent and behind the front wheels 10 and 11 and each of the wheel sets having been folded towards the centre so that the two front wheels are adjacent one another and the two rear wheels are adjacent one another.

This preferred embodiment provides the side members 6 and 7 so that they form a generally A-frame construction about the seat portion 2. However, the bends or joints at portions 17 and 18 and a pivoting interconnection 36 allow the side frame members 6 and 7 to pivot towards each other while maintaining some degree of separation as shown by arrow 27 in Fig. 5. Even while in this collapsed state, this separation allows a child's or doll's head to be accommodated between the side frame members 6 and 7 should the child inadvertently still be in the pushchair when some form of collapse of the chair occurs. This feature is provided to reduce the risk of injury to the child in such a circumstance or damage to an expensive doll.

Referring particular to Fig. 2, the side cross member 24 between the side member 7 and the rear member 15 can be seen to be pivotally connected at one end 28 to the side frame member 7. At the other end, a joint 29 is provided which allows for both pivotal or rotational movement about a rotational joint 30 and sliding engagement with the rear frame member 15 by the provision of the sliding joint 31. This sliding joint 31 is provided as a collar about the rear frame member 15.

The provision of such a joint 29 allows some movement of the rear frame member 15 away from the side member 7 to further open up the spacing between the front and rear wheels. Rear frame member 15 may be provided with some elastic movement in the joint 32 where it is attached to the side frame member 7 to pivot from the side frame member 7. Although provided with a restriction 33 on that pivotal movement in the form of a stop to inhibit further rotation, some flexibility in this joint and the flexibility provided by the sliding engagement 31 allows a degree of suspension to be provided to the pushchair or stroller. Furthermore, if the load in the seat portion 2 increases, the rear wheels will tend to move away from the front wheels to increase the wheel base and allow better distribution of the load and greater stability. The elbow joint 34 being a bend in the rear frame member 15 inhibits travel of the collar 31 past that point to act as an ultimate limit against further movement of the rear frame member 15 from the side frame member 17.

The invention has generally been described with reference to a pushchair or stroller. Of course, similar considerations can be provided to prams or other child or doll carriage apparatus where the side frame members collapse towards each other when the apparatus is folded for transportation. In any of these types of apparatus, increased separation in the region such as is shown by arrow 27 in this instance, being the approximate position of a child's head, may reduce injury upon inadvertent collapse of the pushchair.

In manufacturing the apparatus, the frame members can be made from a variety of materials and this preferred embodiment utilizes metal cross members and hollow metal tube for the framing members. Other generally rigid materials may be utilized as desired. The handle 16 may be conveniently made from many suitable materials such as plastic and the wheels also made from plastic, rubber or other conventional materials.

Thus it can be seen that the invention provides a child carriage apparatus with some reduced risk of injury to a child should the apparatus inadvertently collapse to its transportation position while a child is still resident in the seat.

Similar consideration is made in providing doll carriage apparatus which are often provided to imitate the larger child carrying apparatus.

Although described with reference to preferred embodiments, these are not intended to be in any sense limiting to the scope of the invention as defined by the appended claims. Integers recited throughout the description are deemed to incorporate known equivalents to those skilled in the art as may be appropriate.

## Claims

1. A child or doll carriage apparatus comprising:
- a foldable seat portion for supporting a child or doll;
- a frame about said seat portion supporting said seat portion;
- at least two side frame members on opposed sides of said seat portion forming part of said frame;
- wheels connected to said frame to support said apparatus on a surface; and
- wherein said side frame members are movable between a first or in-use position in which said side frame members are separated one from the other and a second or collapsed position in which lower ends of said side frame members can be positioned adjacent to each other and an upper portion of said side frame members maintains some separation to accommodate the head of a child or doll.

2. A child or doll carriage apparatus as claimed in claim 1 wherein said frame comprises said at least two side frame members extending to terminate at one end supported by wheels and rear frame members pivotally attached with respect to said side frame members to extend rearwardly and terminate in further wheels supporting the apparatus.

3. A child or doll carriage apparatus as claimed in claim 1 or claim 2 wherein said at least two side frame members are pivotally connected with respect to each other at upper ends distal from said wheels.

4. A child or doll carriage apparatus as claimed in claim 1 wherein said apparatus comprises a pushchair or stroller.

5. A child or doll carriage apparatus comprising:
- two side frame members, each side frame member having an upper and a lower end;
- wheels attached to lower ends of each of said side frame members;
- rear frame members interconnected directly or indirectly with said side frame members and having lower ends;
- wheels attached to said lower ends of said rear frame members;
- a foldable seat portion at least partly supported from said side members; and
- wherein said apparatus is changeable from a first configuration in which at least lower ends of said side frame members are spaced one from the other and said lower ends of said rear frame members are spaced from the lower ends of said side frame members and a second configuration wherein said lower ends of said side frame members are adjacent one another, said lower ends of said rear frame members are adjacent to one another and adjacent and behind said side frame members and an upper portion of each of said side frame members remains separated from each other to accommodate the head of a child or doll.

6. A child or doll carriage apparatus comprising:
- a seat portion;
- a frame about said seat portion to support said seat portion;
- wheels on lower extremities of said frame to carry said frame on a surface;
- front and rear legs forming at least a part of said frame and pivotal with respect to each other to vary the distance between the lower extremities of said front and rear legs; and
- an articulated member between said front and rear legs pivotally connected with respect to one leg and pivotally and slidingly engaged on a respect of further leg and containing an articulated joint intermediate of the connections to said legs.
